# EUROPÄISCHE PATENTANMELDUNG

(11) **EP 1 529 563 A1**
(43) Veröffentlichungstag der Anmeldung: **11.05.2005**
(21) Anmeldenummer: 04021159.1
(22) Anmeldetag: 06.09.2004
(51) Int. Cl.: B01F 7/24, B01F 15/00, F16H 1/20, F16H 37/06, A01K 5/00

(54) **Mischer**

(30) Priorität: 05.11.2003 DE 20316997 U
(71) Anmelder: Trioliet Mullos B.V., 7570 AC Oldenzaal (NL)
(72) Erfinder: Van Der Plas, Nicolaas, 7576 WX Oldenzaal (NL)
(74) Vertreter: Grünecker, Kinkeldey, Stockmair & Schwanhäusser Anwaltssozietät

(57) **Zusammenfassung**

Bei einem Mischer (M) mit mindestens zwei vertikalen Mischschnecken (2) und einer Winkelgetriebeeinheit (W1, W29 pro Mischschnecke, weist zumindest die vordere Winketgetriebeeinheit (E1) eine durchgehende Antriebswelle (7) für ein mit einem Tellerrad (9) kämmendes Treibritzel (8) auf und wir die Mischschnecke (2) über eine Ausgangswelle (10) der Winkelgetriebeinheit angetrieben, wobei jede Mischschnecke (2) auf einer die Ausgangswelle (10) enthaltenden, stationären, hohlen Tragsäule (4) fliegend gelagert ist und zumindest die vordere Winkelgetriebeeinheit (W1) als Winkelstirnradgetriebe mit wenigstens einem Stimradsatz (13, 14) ausgebildet ist und das die Ausgangswelle (10) treibende Stirnrad mit zumindest einem Ausgangswellen-Lager (L1, L2) in der Tragsäule (4) abgestützt ist.

## Beschreibung

Die Erfindung betrifft einen Mischer der im Oberbegriff der nebengeordneten Ansprüchen 1 und 2 angegeben Art.

Bei dem aus DE 202 07 545 U bekannten Mischer sind bei einer eine formschlüssige Schaltkupplung im Antriebsstrang zwischen den beiden Mischschnecken enthaltenden Ausführungsform beide Winkelgetriebeeinheiten mit einem die Ausgangswelle treibenden Tellerrad und einem auf dem Antriebswellenstrang angeordneten Kegelradritzel ausgebildet. Jede Ausgangswelle ist eine vertikale Zentralachse der Mischschnecke. Die Zentralachse ist mit der Schneckenspirale bestückt. Jede Zentralachse ist an ihrem unteren Ende von der zugehörigen Winkelgetriebeeinheit aufgenommen. Beide Winkelgetriebeeinheiten können von einem vorgesetzten Untersetzungsgetriebe angetrieben sein, das fluchtende Ein- und Ausgangswellen besitzt.

Bei dem aus US 4 432 499 bekannten Mischer sind die Mischschnecken nicht nur im Bodenbereich, sondern auch in einer Abdeckung des Mischers oben gelagert. Die Kegelradritzel und Tellerräder der beiden Winkelgetriebeeinheiten sind zur Übertragung hoher Drehmomente bzw. hoher Drehzahlen ungenügend gelagert. Es ist ein stark untersetzendes Reduktionsgetriebe in Form eines Kettentriebs vorgesehen.

Bei dem aus DE 200 100 221 U bekannten Mischer erstrecken sich von einem eingangsseitigen Reduktionsgetriebe zwei getrennte Antriebsstränge zu den beiden Winkelgetriebeeinheiten. Die Mischschnecken sind fliegend auf Tragsäulen am Mischerboden gelagert. In entsprechend dieser Publikation gebauten Mischern sind die Winkelgetriebeeinheiten Winkel-Planetengetriebe, die schwer, großbauend und teuer sind. Bei dem aus DE 203 05 983 U bekannten Mischer verlaufen von einem eingangsseitigen Reduktionsgetriebe zwei getrennte Antriebsstränge zu den beiden Winkelgetriebeeinheiten. Die Mischschnecken sind fliegend auf am Boden des Mischers verankerten Tragsäulen gelagert. Nach dieser Publikation gebaute Mischer enthalten Winkel-Planetengetriebe als Winkelgetriebeeinheiten. Die Bauhöhe der Winkelgetriebeeinheiten ist unerwünscht groß.

Bei in der Praxis bekannten Mischern mit einer Mischschnecke wird ein Winkelgetriebe (Untersetzung 3:1) in Verbindung mit einem einstufigen Planetengetriebe (Untersetzung 6:1) verwendet, was bei einer Eingangsantriebsdrehzahl, z.B. vom Schlepper, von 540 U/min in einer Schneckendrehzahl von ca. 30 bis 35 U/min resultiert. Damit wird ein idealer Kompromiss zwischen dem Leistungsbedarf und der Misch- und Dosierleistung erzielt. Ein Reduktionsgetriebe, das z.B. eine 70%-Mischdrehzahl und eine 100%-Dosierdrehzahl zulässt, gestattet die Verwendung eines kleineren leistungsschwächeren Schleppers. Günstig ist, dass sich dabei die Drehrichtung zwischen den Ein- und Ausgangswellen des Reduktionsgetriebes nicht ändert, weil das Reduktionsgetriebe mindestens zwei Zahnradübersetzungen enthält. Bei insbesondere kleineren Mischern mit einer Mischschnecke werden in der Praxis Winkelstimradgetriebe verwendet. Winkelstimradgetriebe sind für Mischer mit zwei Mischschnecken schwierig mit geringer Bauhöhe herzustellen, da die Antriebswelle durch zumindest das erste Winkelstirnradgetriebe durchgehen muss, und zwar weil die Lagerung für das Winkelgetriebe und die zweite Stimradstufe hinter der Eingangswelle positioniert sein muss. Aus diesem Grund wird in der Praxis für die erste Mischschnecke ein Winkelgetriebe mit einer durchgehenden Antriebswelle zum zweiten Winkelgetriebe verwendet, und sind die Winkelgetriebe mit Planetengetrieben kombiniert, um eine ausreichende Untersetzung zu erzielen. Dieses Prinzip bedingt unerwünscht viele Drehkomponenten und aufwendige Lagerungen, ist sehr kostspielig und energetisch betrachtet wenig effizient, da sehr viele Zahnräder kämmen. Insbesondere für kleinere Mischer mit mindestens zwei Mischschnecken sind solche Winkel-Planetensysteme teuer und aufwendig.

Weiterer Stand der Technik ist enthalten in DE 102 45 001 A, GB 926 168 A, DE 454 067 C, GB 583 654 A, US 2 869 384 A, US 1 401 916 A und GB 212 507 A.

Der Erfindung liegt die Aufgabe zugrunde, einen Mischer der eingangs genannten Art hinsichtlich der Antriebsvorrichtung baulich so zu vereinfachen, dass Kosten gegenüber bekannten Lösungen einsparbar und die Effizienz steigerbar sind.

Die gestellte Aufgabe wird erfindungsgemäß entweder mit den Merkmalen des Anspruchs 1 oder den Merkmalen des Anspruchs 2 gelöst.

Die fliegend auf der stationären, hohlen Tragsäule stabil gelagerte Mischschnecke ermöglicht es, den oberen Bereich des Mischers einfacher auszubilden, was hinsichtlich der Befüllung zweckmäßig ist. Der Tragsäule wird die zusätzliche Aufgabe zugewiesen, das die Ausgangswelle treibende Stirnrad (des stärker untersetzenden Winkelstimradgetriebes) stabil abzustützen, ohne die Bauhöhe der Winkelgetriebeeinheit vergrößern zu müssen. Mit dem wenigstens einen in der Tragsäule angeordneten, die Ausgangswelle und das Stirnrad abstützenden Lager lässt sich die Winkelgetriebeeinheit baulich einfacher und sehr niedrig ausbilden, so dass genügend Platz für die durchgehende Antriebswelle bleibt, ohne beispielsweise die Bodenfreiheit des Mischers zu beeinträchtigen. Bei dem zweiten Prinzip wird die Ausgangswelle von der Hohlwelle des Tellerrads bzw. des Stirnrads angetrieben, was montagetechnische Vorteile bieten kann. Da das Tellerrad bzw. Stirnrad über die Hohlwelle und zusätzlich mit einem Lager zwischen der Antriebswelle und dem Tellerrad bzw. dem Stirnrad zweifach abgestützt ist, lassen sich hohe Kräfte problemlos übertragen. Dennoch lässt sich die Winkelgetriebeeinheit baulich einfach und niedrig gestalten. Der Lagerstuhl hält nämlich den Durchgang für die Antriebswelle frei und überträgt dennoch die Lagerkräfte großflächig in das Getriebegehäuse der Winkelgetriebeeinheit.

Bei einem die Ausgangswelle in der Tragsäule direkt antreibenden Stirnrad ist es noch zweckmäßiger, das Stirnrad über zwei beabstandete Ausgangswellen-Lager in der Tragsäule abzustützen. Dadurch wird eine extrem niedrige Bauhöhe der Winkelgetriebeeinheit bei einer einfachen Getriebeausbildung erreicht, und zwar selbst für relativ große zu übertragende Drehmomente.

Alternativ kann bei der direkt von dem Stirnrad getriebenen Ausgangswelle in der Tragsäule zusätzlich zu dem einen Ausgangswellenlager in der Tragsäule ein zweites Lager für das Stirnrad in dem Lagerstuhl und zwischen der Antriebswelle und dem Stirnrad untergebracht werden. Dennoch lässt sich die Antriebswelle nahe an das Stirnrad hin bauen, so dass Bauhöhe gespart wird. Die Lagerkräfte werden über den Lagerstuhl großflächig in das Getriebegehäuse eingeleitet. Zweckmäßig wird der Lagerstuhl einstückig im Getriebegehäuse ausgebildet.

Bei einer als Winkelstimradgetriebe ausgebildeten Winkelgetriebeeinheit ist es zweckmäßig, das Tellerrad gemeinsam mit einem Stirnrad entweder mit zwei oberhalb des Tellerrads angeordneten Lagern oder mit einem oberen und einem unteren, dann im Lagerstuhl angeordneten Lager abzustützen, so dass die Antriebswelle den Lagerstuhl durchsetzt und Bauhöhe eingespart wird.

Der Lagerstuhl ist zweckmäßig ein Ringkörper mit einem Lagersitz und wenigstens einem brückenartigen Unterteil, vorzugsweise sogar zwei Unterteilen. Der Lagerstuhl ist über die Unterteile zumindest an der Innenwand an eines von der Antriebswelle durchsetzten Kanals des Getriebegehäuses abgestützt, oder einstückig in den Kanal eingeformt. Der Kanal enthält die Antriebswelle, die den Lagerstuhl durchsetzt. Dies resultiert in einer sehr kompakten Bauweise der Winkelgetriebeeinheit.

Um Bauhöhe zu sparen, ist es zweckmäßig, das auch unterseitig gelagerte Tellerrad an der dem Lagerstuhl zugewandten Unterseite mit einer ringförmigen Vertiefung auszubilden, in die das Lager und der Lagersitz des Lagerstuhls eingreifen. Dadurch lässt sich die Antriebswelle sehr nahe an dem Tellerrad anordnen, so dass Bauhöhe gespart wird.

Bei Verwendung zweier Winkelstirnradgetriebe als die beiden Winkelgetriebeeinheiten könnte wegen der hierbei möglichen Untersetzung bei einfachen Mischern ein Reduktionsgetriebe weggelassen werden. Bei Ausbildung der Winkelgetriebeeinheiten als Winkelgetriebe mit Tellerrad und Kegelritzel ist wegen der dann gegebenenfalls zu geringfügigen Untersetzung jedoch ein vorgeschaltetes Reduktionsgetriebe sehr zweckmäßig. Wenn das Reduziergetriebe einstufig ist, lässt es sich mit geringer Bauhöhe ausbilden. Zweckmäßig wird das einstufige Reduziergetriebe sogar so ausgebildet, dass es sich zwischen mindestens zwei Geschwindigkeitsstufen umschalten lässt, beispielsweise, um den Anforderungen an die Mischdrehzahl bzw. Dosierdrehzahl gerecht zu werden. Gegebenenfalls sind sogar mehr als zwei Geschwindigkeitsstufen schaltbar. Das Reduziergetriebe hat ferner den Vorteil, relativ klein bauende einfache Winkelgetriebeeinheiten verwenden zu können, weil deren Eingangsdrehzahl bereits relativ stark reduziert sein kann.

Da Reduziergetriebe mit in Höhenrichtung zueinander versetzten Ein- und Ausgangswellen ungünstige Gelenkwellenwinkel vom Schlepper zum Reduktionsgetriebe und/oder vom Reduziergetriebe zur vorderen Winkelgetriebeeinheit bedingen, aus denen hoher Verschleiß oder eine Reduktion der Bodenfreiheit resultiert, oder die wegen anderer Einbauteile in diesem Bereich des Mischers nur sehr schwierig zu realisieren sind, ist es besonders zweckmäßig, ein Reduziergetriebe zu verwenden, dessen Ein- und Ausgangswellen zumindest in etwa koaxial sind. Dadurch lassen sich günstige Knickwinkel der Gelenkwellen erreichen und wird für die Gelenkwellen nur wenig Einbauraum erforderlich. Das Reduziergetriebe baut klein, wenn es einstufig ausgebildet wird. Vorzugsweise lässt es sich zwischen mindestens zwei Geschwindigkeitsstufen umschalten.

Günstige Gelenkwellenwinkel ergeben sich, wenn die koaxialen Ein- und Ausgangswellen des Reduziergetriebes in dessen Getriebegehäuse obenliegend angeordnet sind.

Eine baulich einfache, kleinbauende und effiziente Ausführung des Reduziergetriebes zeichnet sich dadurch aus, dass die Eingangswelle mit zwei Ritzeln und die Ausgangswelle mit zwei mit den Ritzeln kämmenden, auf der Ausgangswelle drehbaren Zahnrädern versehen ist, und dass eine Schaltbuchse vorgesehen ist, mit der wahlweise je ein Zahnrad mit der Ausgangswelle kuppelbar ist. Es erfolgt zwar eine Drehrichtungsumkehr von der Eingangswelle in die Ausgangswelle. Jedoch ist der Aufbau des Reduktionsgetriebes, trotz der Schaltbarkeit, einfach und effizient, da nur zwei kämmende Zahnradpaare benötigt werden.

Bei einer besonders zweckmäßige Ausführungsform eines Reduziergetriebes mit koaxialen Ein- und Ausgangswellen weist eine davon ein Zahnrad und die andere zwei Zahnräder auf, die mit drei Umkehrzahnrädem auf einer Nebenwelle kämmen, wobei eine Schaltbuchse zwei verschiedene Geschwindigkeitsstufen schalten lässt. Ein besonderer Vorteil dieser sehr einfachen und kompakten Reduziergetriebeausbildung ist es, dass die Drehrichtung von der Eingangswelle in die Ausgangswelle beibehalten wird, und nur drei kämmende Zahnradpaare benötigt werden.

Eine weitere, sehr zweckmäßige weil einfache und effiziente Ausführungsform eines Reduziergetriebes mit koaxialen Ein- und Ausgangswellen weist auf den Ein- und Ausgangswellen je ein Zahnrad auf, von denen eines mit einer Kupplungsmuffe frei drehbar und das andere drehfest angeordnet ist, und eine Nebenwelle mit zwei drehfest angeordneten Umkehrzahnrädem sowie eine zwischen den Zahnrädern verstellbare Schaltbuchse zum Schalten zweier Geschwindigkeitsstufen. Obwohl das Reduziergetriebe die Eingangsdrehrichtung ausgangsseitig beibehält, und zwei Geschwindigkeitsstufen schaltbar sind, werden nur zwei Zahnradpaare benötigt, so dass das Reduziergetriebe klein baut und einen guten Wirkungsgrad hat.

Anhand der Zeichnung werden Ausführungsformen des Erfindungsgegenstandes erläutert. Es zeigen:
- Fig. 1: eine perspektivische Teilschnittansicht eines Mischers mit einer Antriebsvorrichtung,
- Fig. 2: eine Vertikalschnittansicht einer Winkelgetriebeeinheit, die als Winkelstimradgetriebe ausgebildet ist,
- Fig. 3: einen um 90° gedrehten Vertikalschnitt zu Fig. 2,
- Fig. 4: einen Vertikalschnitt einer anderen Ausführungsform einer Winkelgetriebeeinheit, die als Winkelstirnradgetriebe ausgebildet ist,
- Fig. 5: einen perspektivische Vertikalschnittansicht einer weiteren Ausführungsform einer Winkelgetriebeeinheit, die als Winkelgetriebe ausgebildet ist,
- Fig. 6: einen Vertikalschnitt einer weiteren Ausführungsform einer Winkelgetriebeeinheit, die als Winkelstimradgetriebe ausgebildet ist,
- Fig. 7: eine perspektivische Schnittansicht eines schaltbaren Reduziergetriebes,
- Fig. 8: eine Vertikalschnittansicht eines schaltbaren Reduziergetriebes mit koaxialen Ein- und Ausgangswellen, und
- Fig. 9: eine Vertikalschnittansicht einer weiteren Ausführungsform eines schaltbaren Reduziergetriebes mit koaxialen Ein- und Ausgangswellen.

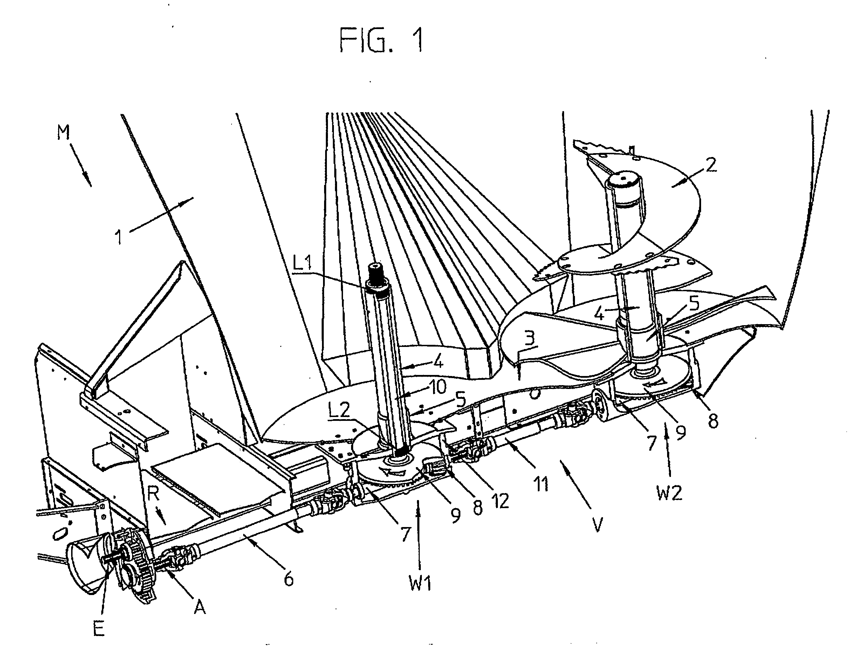

Von einem in Fig. 1 gezeigten Mischer M ist nur ein Teil des Bodenbereiches eines Mischbehälters 1 mit einer mechanischen Antriebsvorrichtung V für zumindest zwei vertikale Mischschnecken 2 gezeigt. Die Mischschnecken 2 sind auf einer Bodenplatte 3 des Behälters 1 unten fliegend auf Tragsäulen 4 drehgelagert. Jede Tragsäule 4 trägt im unteren Bereich eine Drehlagermanschette 5 für die Mischschnecke 2. Die Antriebsvorrichtung V weist einen durchgehenden Antriebsstrang auf, der von einer Eingangswelle E eines vomeliegenden Reduziergetriebes R zu einer vorderen Winkelgetriebeeinheit W1 für die vordere Mischschnecke und weiter zu einer hinteren Winkelgetriebeeinheit W2 für die zweite Mischschnecke 2 verläuft. Das Reduziergetriebe R ist bei dieser Ausführungsform einstufig, so dass die Drehrichtung umgekehrt wird. Die Ausgangswelle A des Reduziergetriebes R ist gegenüber der Eingangswelle E höhenversetzt und über eine Gelenkwelle 6 mit einer die vordere Winkelgetriebeeinheit W1 durchsetzenden Antriebswelle 7 verbunden. Die Antriebswelle 7 ist über eine weitere Gelenkwelle 11 mit der Antriebswelle 7 der hinteren Winkelgetriebeeinheit W2 verbunden.

In dieser Ausführungsform ist jede Winkelgetriebeeinheit W1, W2 (die Winkelgetriebeeinheit W2 entspricht weitestgehend der Winkelgetriebeeinheit W1) als reines Winkelgetriebe mit einem Kegelradritzel 8 auf der Antriebswelle 7 und einem großen Tellerrad 9 ausgebildet, um eine deutliche Untersetzung zu erzeugen. Das Tellerrad 9 ist mit einer Ausgangswelle 10 verbunden, die mit der Mischschnecke 2 gekuppelt wird und im Inneren der Tragsäule 4 verläuft. Zur Drehabstützung des Tellerrades 9, unter dem die durchgehende Antriebswelle 7 in einem Getriebegehäuse 12 verläuft, sind in Fig. 1 zwei axial beabstandete Ausgangswellen-Lager L1, L2 im Inneren der Tragsäule 4 vorgesehen. Alternativ (nicht gezeigt) könnte das untere Ausgangswellen-Lager L2 auch in einer Deckplatte 22 des Getriebegehäuses 12 angeordnet sein. Eine weitere Abstützung des Tellerrades 9 ist nicht erforderlich. Die Antriebswelle 7 ist sehr knapp unterhalb des Tellerrades 9 positioniert, so dass eine geringe Bauhöhe der Winkelgetriebeeinheit W1, W2 erzielt wird.

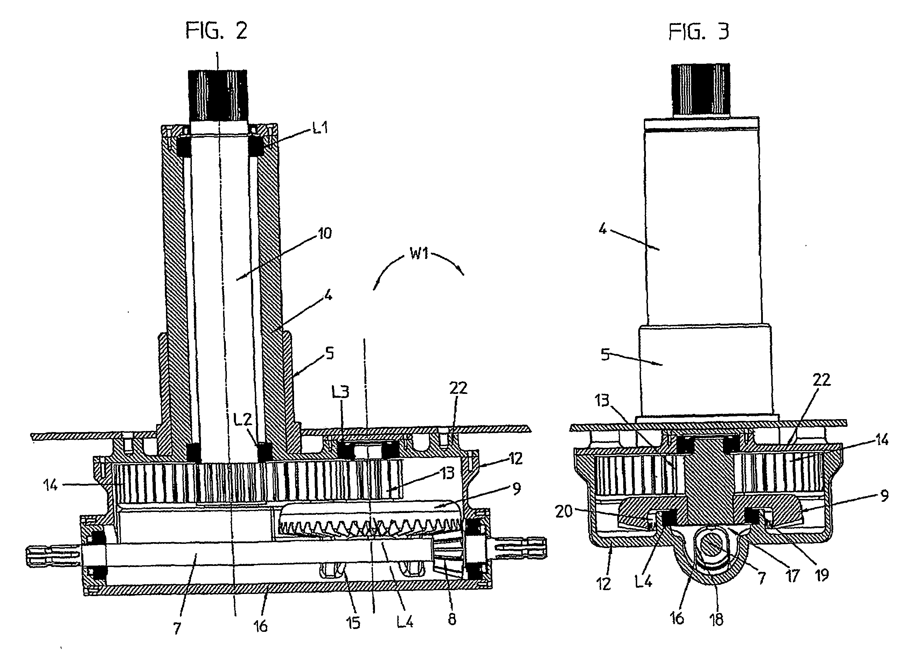

Fig. 2 verdeutlicht eine andere Ausführungsform beispielsweise der vorderen Winkelgetriebeeinheit W1 von Fig. 1. Diese Winkelgetriebeeinheit W1 ist als Winkelstimradgetriebe mit einer zweifachen Untersetzung ausgebildet, so dass gegebenenfalls das in Fig. 1 gezeigte Reduziergetriebe R wegfallen kann. Zweckmäßig wird aber, um zwischen einer Misch- und einer Dosier-Drehzahl umschalten zu können, dennoch ein Schalt- und/oder Reduziergetriebe R vorgesehen.

Das Winkelstimradgetriebe der Fig. 2 besteht aus dem mit dem Kegelradritzel 8 kämmenden Tellerrad 9, einem mit dem Tellerrad 9 verbundenen Stirnrad 13 und einem mit dem Stirnrad 13 kämmenden, wesentlich größeren Stirnrad 14, das mit der Ausgangswelle 10 verbunden ist. Die Abstützung des Stimrades 14 erfolgt auch bei dieser Ausführungsform mittels zweier beabstandeter Ausgangswellenlager L1 und L2 in der Tragsäule 4. Die durchgehende Antriebswelle 7 ist ganz knapp unterhalb des Tellerrades 9 positioniert, und zwar in einem im Getriebegehäuse 12 geformten Kanal 16. Das Tellerrad 9 mit dem Stirnrad 13 ist über ein im Getriebegehäuse 12 oberhalb des Stimrades 13 platziertes drittes Lager L3 und ein in Fig. 2 nicht sichtbares, unterhalb des Tellerrades 9 positioniertes viertes Lager L4 abgestützt. Das dritte Lager L3 liegt in etwa auf der Höhe des unteren Ausgangswellenlagers 10 und ist in dem Gehäusedeckel 22 des Getriebegehäuses 12 angeordnet.

In den Fig. 2 und 3 ist das untere vierte Lager L4 in einem Lagerstuhl 15 angeordnet, der entweder in das Getriebegehäuse 12 und den die Antriebswelle 7 aufnehmenden Kanal 16 eingesetzt oder mit diesen Teilen einstückig ausgebildet ist. Der Lagerstuhl 15 ist durchbrochen, so dass er um die Antriebswelle 7 herumgreift. Der Lagerstuhl weist einen Lagersitz für das Lager L4 in Form eines angenäherten Ringkörpers 19 auf, von dem sich wenigstens ein brückenartiger Unterteil 17 nach unten erstreckt. Zweckmäßig sind zwei Unterteile 17 vorgesehen, die über den Ringkörper 19 miteinander verbunden sind. Der Ringkörper 19 greift mit dem unteren Lager L4 in eine untere, ringförmige Vertiefung 20 des Tellerrades 9 ein, um Bauhöhe zu sparen, und das Tellerrad an einer optimalen Position abzustützen. Die Durchgänge der Unterteile 17 sind mit 18 angedeutet.

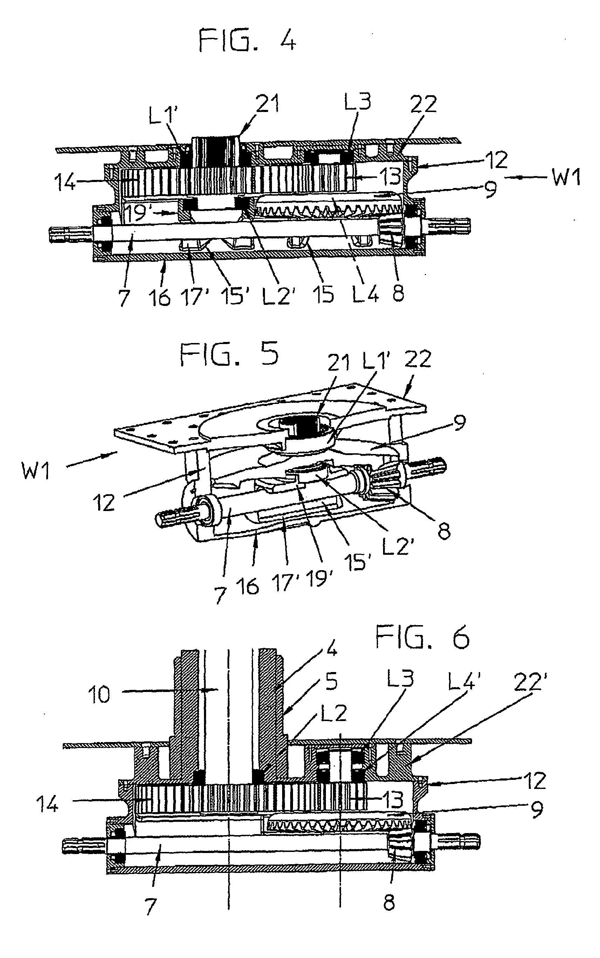

Fig. 4 verdeutlicht eine weitere Ausführungsform der Winkelgetriebeeinheit W1, die hier ebenfalls als Winkelstimradgetriebe ausgebildet ist. Die Lagerung mit den Lagern L3 und L4 des Tellerrads 9 mit dem Stirnrad 13 entspricht der in den Fig. 2 und 3 gezeigten. Das Stirnrad 14 der Stimradstufe treibt hier die nicht gezeigte Ausgangswelle zur Mischschnecke über eine Hohlwelle 21 mit einer Innenverzahnung an. Das Stirnrad 14 ist bei dieser Ausführungsform mit einem ersten Hohlwellen-Lager L1' im Gehäusedeckel 22 des Getriebegehäuses 12 und mit einem unteren Lager L2' in dem Lagerstuhl 15' abgestützt. Der Lagerstuhl 15' ist ausgebildet wie der bereits beschriebene Lagerstuhl 15, und ist für die Antriebswelle 7 durchbrochen. Der Lagerstuhl 15' besitzt ebenfalls den Ringkörper 19' und die Unterteile 17', um die Lagerkräfte in das Getriebegehäuse 12 zu übertragen und dennoch die knappe Position der Antriebswelle 7 unterhalb des Tellerrades 9 zu ermöglichen.

Fig. 5 verdeutlicht eine abgewandelte Ausführungsform der Winkelgetriebeeinheit W1 gemäß Fig. 1, d.h., einer Winkelgetriebeeinheit W1, die als reines Winkelgetriebe mit dem Kegelradritzel 8 auf der durchgehenden Antriebswelle 7 und dem Tellerrad 9 ist. Das Tellerrad 9 treibt hier jedoch die nicht gezeigte Ausgangswelle nicht direkt an, sondern über eine Hohlwelle 21 analog zu Fig. 4. Unterschiedlich ist bei diese Ausführungsform, dass das Tellerrad 9 ähnlich wie in Fig. 4 das Stirnrad 14 mit einem oberen Lager L1' im Gehäusedeckel 22 des Getriebegehäuses 12 abgestützt ist, und zusätzlich mit einem unteren Lager L2', das in dem Lagerstuhl 15'gehalten wird, analog zu Fig. 4. Fig. 5 lässt gut die Ausbildung des Lagerstuhls 15' erkennen, der sich mit den brückenartigen Unterteilen oder einem einzigen brückenartigen Unterteil 17' im Kanal 16 abstützt oder sogar einstückig mit diesem und dem Getriebegehäuse 12 ausgebildet ist.

Fig. 6 verdeutlicht eine weitere Ausführungsform der Winkelgetriebeeinheit W1, die als Winkelstimradgetriebe ausgebildet ist. Das Tellerrad 9 mit dem Stirnrad 13 ist nur oben über dritte und vierte Lager L3, L4' im hier etwas dicker ausgebildeten Gehäusedeckel 22' des Getriebegehäuses 12 abgestützt, so dass der Lagerstuhl von Fig. 4 unterhalb des Tellerrades 9 entfällt.

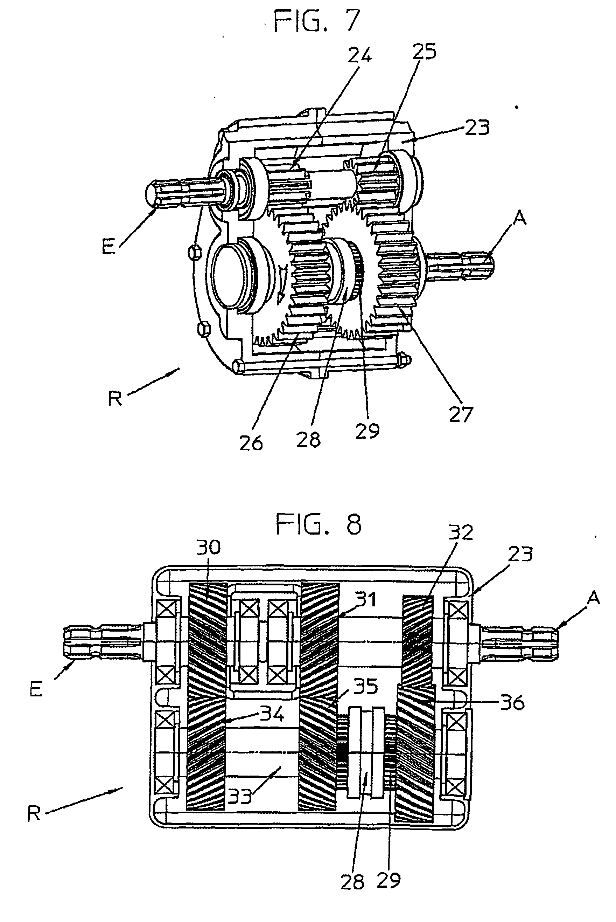

Das in Fig. 7 gezeigte Reduziergetriebe R ist bei jeder der vorerwähnten Ausführungsformen der Winkelgetriebeeinheiten zweckmäßig einsetzbar. In einem Getriebegehäuse 23 sind die Ein- und Ausgangswellen E, A höhenversetzt angeordnet. Die Eingangswelle E trägt zwei Zahnritzel 24, 25, die mit zwei auf der Ausgangswelle A frei drehbaren Zahnrädern 26, 27 kämmen. Zwischen den beiden Zahnrädern 26, 27 ist auf der Ausgangswelle A eine damit drehfest verbundene Schaltbuchse 28 axial verschiebbar, um wahlweise eines der Zahnräder 26, 27 mit der Ausgangswelle A zu kuppeln, und zwar über eine Keilverzahnung 29. Das Reduziergetriebe R ist einstufig und kehrt die Eingangsdrehrichtung an der Ausgangswelle A um.

Das in Fig. 8 gezeigte Reduziergetriebe R hat koaxiale Ein- und Ausgangswellen E, A, ist zwischen mindestens zwei Geschwindigkeitsstufen schaltbar, und verändert die Eingangsdrehrichtung nicht. Auf der Eingangswelle E ist ein Zahnrad 30 drehfest angeordnet. Auf der Ausgangswelle A sind zwei unterschiedlich große Zahnräder 31, 32 drehfest angeordnet. Parallel zu den Ein- und Ausgangswellen ist eine Nebenwelle 33 im Getriebegehäuse 23 gelagert, die zwei gleich große Zahnräder 34, 35 und ein größeres Zahnrad 36 trägt. Das Zahnrad 34 ist drehfest angeordnet, während die Zahnräder 35, 36 drehbar auf der Nebenwelle 33 gelagert sind. Zwischen den Zahnrädern 35, 36 ist die Schaltbuchse 28 axial verschiebbar, um wahlweise eines der Zahnräder 35 oder 36 mit der Nebenwelle 33 zu kuppeln. Das Prinzip könnte auch abgewandelt werden, so dass die Schaltbuchse auf der Eingangs- oder der Ausgangswelle angeordnet wird.

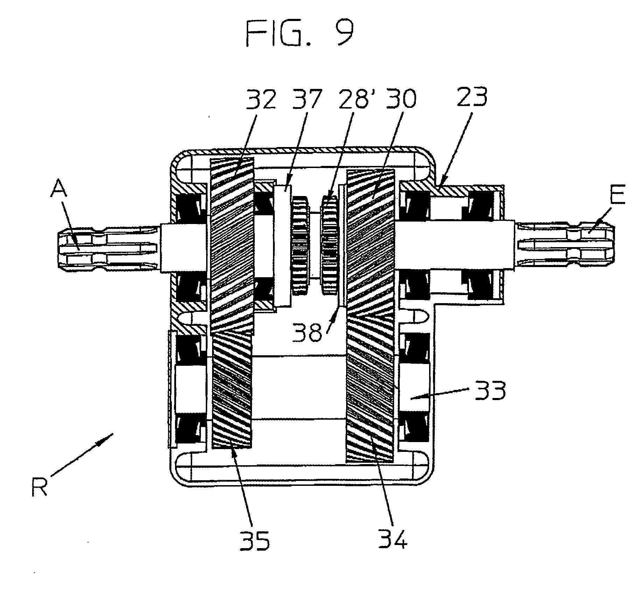

Das in Fig. 9 gezeigte Reduziergetriebe R ist dem Reduziergetriebe R von Fig. 8 ähnlich, weist jedoch nur zwei kämmende Zahnradpaare auf, um einerseits die Eingangsdrehrichtung nicht umzukehren und andererseits zwei Schaltstufen zu ermöglichen.

Auf der Eingangswelle E ist ein Zahnrad 30 drehfest angeordnet. Auf der zur Eingangswelle E koaxialen Ausgangswelle A ist ein größeres Zahnrad 32 auf einer Kupplungsmuffe 37 drehfest angeordnet, die auf der Ausgangswelle drehbar ist. Zwischen der Kupplungsmuffe 37 und dem Zahnrad 30 ist die Schaltbuchse 28' axial verstellbar angeordnet, die zum Schalten der beiden Geschwindigkeitsstufen dient. Parallel zu den Ein- und Ausgangswellen E, A ist die Nebenwelle 33 mit zwei unterschiedlichen großen, jeweils drehfest angeordneten Zahnrädern 34, 35 im Getriebegehäuse 23 enthalten. In der einen Schaltstellung kuppelt die Schaltbuchse 28' die Eingangswelle direkt mit der Ausgangswelle, so dass sich das Zahnrad 32 mit der Kupplungsmuffe 37 frei dreht. In der anderen Schaltstufe kuppelt die Schaltbuchse 28' die Kupplungsmuffe 37 mit der Ausgangswelle A, so dass die Übersetzung zwischen den Zahnrädern 30, 34 und 35, 32 auf die Ausgangswelle übertragen wird. Zum Kuppeln der Schaltbuchse 28 mit der Ausgangswelle kann z.B. ein Klauen-Kupplungsträger 38 vorgesehen sein.

## Patentansprüche

1. Mischer (M) mit einer mechanischen Antriebsvorrichtung (V) für mindestens zwei vertikale Mischschnecken (2), mit einer Winkelgetriebeeinheit (W1, W2) pro Mischschnecke, von denen zumindest die vordere Winkelgetriebeeinheit (W1) in einem Getriebegehäuse (12) eine durchgehende Antriebswelle (7) für ein mit einem Tellerrad (9) kämmendes Treibritzel (8) aufweist und die Mischschnecke (2) über eine Ausgangswelle (10) der Winkelgetriebeeinheit (W1, W2) antreibt, **dadurch gekennzeichnet, dass** jede Mischschnecke (2) im unteren Bereich auf einer die Ausgangswelle (10) enthaltenden stationären, hohlen Tragsäule (4) fliegend gelagert ist, dass die die durchgehende Antriebswelle (7) aufweisende Winkelgetriebeeinheit (W1, W2) als Wnkelstimradgetriebe mit wenigstens einem Stirnradsatz (13, 14) ausgebildet ist und die Ausgangswelle (10) über ein Stirnrad (14) des Stimradsatzes antreibt, und dass das antreibende Stirnrad (14) mit der Ausgangswelle (10) verbunden und mit zumindest einem Ausgangswellen-Lager (L1, L2) in der Tragsäule (4) abgestützt ist.

2. Mischer (M) mit einer mechanischen Antriebsvorrichtung (V) für mindestens zwei vertikale Mischschnecken (2), mit einer Winkelgetriebeeinheit (W1, W2) pro Mischschnecke, von denen zumindest die vordere Winkelgetriebeeinheit (W1) in einem Getriebegehäuse (12) eine durchgehende Antriebswelle (7) für ein mit einem Tellerrad (9) kämmendes Treibritzel (8) aufweist und die Mischschnecke (2) über eine Ausgangswelle (10) antreibt, **dadurch gekennzeichnet, dass** jede Mischschnecke (2) im unteren Bereich fliegend auf einer die Ausgangswelle (10) enthaltenden Tragsäule (4) gelagert ist, dass die die durchgehende Antriebswelle (7) aufweisende Winkelgetriebeeinheit (W1, W2) entweder die Ausgangswelle (10) über eine Hohlwelle (21) des Tellerrades (9) antreibt oder als Winkelstirnradgetriebe mit wenigstens einem Stirnradsatz (13, 14) ausgebildet ist und die Ausgangswelle (10) über eine Hohlwelle (21) eines Stirnrads (14) antreibt, und dass das mit der Hohlwelle (21) verbundene Tellerrad (9) bzw. Stirnrad (14) im Getriebegehäuse (16) mit einem Lager (L2') zwischen der Antriebswelle (7) und dem Tellerrad (9) bzw. dem Stirnrad (14) in einem für die Antriebswelle (7) durchbrochenen Lagerstuhl (15') und mit einem oberen Hohlwellenlager (L1') abgestützt ist.

3. Mischer nach Anspruch 1, **dadurch gekennzeichnet, dass** das mit der Ausgangswelle (10) verbundene Tellerrad (12, 9) mit zwei beabstandeten Ausgangswellen-Lagem (L1, L2) in der Tragsäule (4) abgestützt ist.

4. Mischer nach Anspruch 1, **dadurch gekennzeichnet, dass** zwischen dem Stirnrad (14) und der Antriebswelle (7) ein zweites Lager (L2') für das. Stirnrad (14), in einem, vorzugsweise einstückigen, für die Antriebswelle (7) durchbrochenen Lagerstuhl (15') des Getriebegehäuses (12) vorgesehen ist.

5. Mischer nach Anspruch 1 oder 2, **dadurch gekennzeichnet, dass** das Tellerrad (9) des Kegelstirnradgetriebes gemeinsam mit einem Stirnrad (13) im Getriebegehäuse (12) entweder mit zwei an der der durchgehenden Antriebswelle (7) abgewandten Seite des Tellerrads angeordneten Lagern (L3, L4) oder mit einem zwischen der Antriebswelle (7) und dem Tellerrad (9) in einem für die Antriebswelle (7) durchbrochenen Lagerstuhl (15) angeordneten Lager (L4') und einem oberhalb des Tellerrades (9) angeordneten Lager (L3) abgestützt ist.

6. Mischer nach wenigstens einem der Ansprüche 1 bis 5, **dadurch gekennzeichnet, dass** der Lagerstuhl (15, 15') einen Ringkörper (19, 19') mit einem Lagersitz und wenigstens einen brückenartigen Unterteil (17, 17') aufweist, vorzugsweise zwei über den Ringkörper verbundene brückenartige Unterteile, und dass jeder Unterteil zumindest an der Innenwand eines von der Antriebswelle (7) durchsetzten Kanals (16) des Getriebegehäuses (12) abgestützt ist.

7. Mischer nach Anspruch 6, **dadurch gekennzeichnet, dass** der Lagerstuhl (15, 15') in einem den Kanal (16) aufweisenden Getriebegehäuse-Unterteil einstückig ausgebildet ist.

8. Mischer nach Anspruch 6, **dadurch gekennzeichnet, dass** das Tellerrad (9) an der eine Kegelverzahnung für das Treibritzel (8) aufweisenden Unterseite eine ringförmige Vertiefung (20) für das Lager (L4) und den Lagersitz des Lagerstuhls (15, 15') aufweist.

9. Mischer nach einem der Ansprüche 1 oder 2, **dadurch gekennzeichnet, dass** ein Reduziergetriebe (R) für die Antriebswelle (7) mit zumindest in etwa koaxialen Einund Ausgangwellen (A, E) einstufig und zwischen mindestens zwei Geschwindigkeitsstufen umschaltbar ausgebildet ist.

10. Mischer nach Anspruch 9, **dadurch gekennzeichnet, dass** die koaxialen Ein- und Ausgangwellen (A, E) im Getriebegehäuse (23) des Reduziergetriebes (R) obenliegend angeordnet sind.

11. Mischer nach Anspruch 9, **dadurch gekennzeichnet, dass** das Reduziergetriebe (R) die Eingangswelle (E) mit zwei Ritzeln (24, 25) und die Ausgangswelle (A) mit zwei mit den Ritzeln (24, 25) kämmenden, auf der Ausgangswelle (A) drehbaren Zahnrädern (26, 27) aufweist, und dass auf der Ausgangswelle (A) eine Schaltbuchse (28) verschiebbar angeordnet ist, mit der wahlweise je ein Zahnrad (26 und 27) mit der Ausgangswelle (A) kuppelbar ist.

12. Mischer nach Anspruch 9, **dadurch gekennzeichnet, dass** eine der Ein- und Ausgangswellen (E, A) ein Zahnrad (30) und die andere zwei Zahnräder (31, 32) aufweist, dass eine Nebenwelle (33) mit drei Umkehrzahnrädem (34, 35, 36) vorgesehen ist, deren Umkehrzahnräder mit den Zahnrädern kämmen, und dass eine Schaltbuchse (28) entweder zwischen den zwei Zahnrädern (31, 32) auf der anderen der Einund Ausgangswellen oder zwischen zwei Umkehrzahnrädem (35, 36) auf der Nebenwelle (33) angeordnet ist, mit der wahlweise je eines der Zahnräder oder der Umkehrzahnräder mit der einen der Ein -und Ausgangswellen oder mit der Nebenwelle kuppelbar ist.

13. Mischer nach Anspruch 9, **dadurch gekennzeichnet, dass** die Eingangs- und die Ausgangswelle (E, A) je ein Zahnrad (30, 32) aufweisen, von denen eines mit einer Kupplungsmuffe (37) frei drehbar und das andere drehfest angeordnet ist, das eine Nebenwelle (33) mit zwei drehfest angeordneten Umkehrzahnrädem (34, 35) vorgesehen ist, deren Umkehrzahnräder mit den Zahnrädern kämmen, und dass zwischen den Zahnrädern (30, 32) eine axial verstellbare Schaltbuchse (28') vorgesehen ist, mit der wahlweise entweder die Kupplungsmuffe (37) mit der Ein- oder der Ausgangswelle oder die Eingangswelle mit der Ausgangswelle kuppelbar ist.
